# EUROPÄISCHE PATENTSCHRIFT

(11) **EP 2 170 599 B1**
(45) Veröffentlichungstag und Bekanntmachung des Hinweises auf die Patenterteilung: **17.04.2019**
(21) Anmeldenummer: 08774874.5
(22) Anmeldetag: 08.07.2008
(51) Int. Cl.: B32B 3/12, B32B 21/06, E04C 2/36

(54) **LEICHTBAUPLATTE**
LIGHTWEIGHT BUILDING PANEL
PANNEAU DE CONSTRUCTION LÉGER

(30) Priorität: 20.07.2007 DE 102007034544
(43) Veröffentlichungstag der Anmeldung: 07.04.2010
(73) Patentinhaber: Fritz Egger GmbH & Co. OG, 6380 St. Johann in Tirol (AT)
(72) Erfinder: HAIDBAUER, Manfred Kurt, A-6372 Oberndorf in Tirol (AT)
(74) Vertreter: Cohausz & Florack
(86) Internationale Anmeldenummer: PCT/EP2008/058829
(87) Internationale Veröffentlichungsnummer: WO 2009/013123

(56) Entgegenhaltungen:
- EP-A- 0 301 195
- EP-A- 1 336 471
- WO-A-2006/100295
- FR-A- 2 872 085

## Beschreibung

Die Erfindung betrifft eine Verwendung einer Mittellage für eine Leichtbauplatte aus zumindest zwei Decklagen und einer Mittellage.

Der Einsatz von Leichtbauplatten (LBPL) im Innenausbau ist aus der Verwendung im Türenbau seit geraumer Zeit bekannt. In letzter Zeit hat die Leichtbauplatte aber auch im Möbelbau verstärkt an Bedeutung gewonnen. Der Grund liegt hier einerseits in den vielfältigen Gestaltungsmöglichkeiten, die sich aufgrund der hohen Bauteildicken erzielen lassen, und zum Anderen am geringen Gewicht, was den Transport und die Montage der daraus hergestellten Möbel wesentlich erleichtert.

Der Hersteller von Möbeln braucht Leichtbauplatten heute nicht mehr selber herzustellen, wie dies früher der Fall war. Mehrere Arbeitsgänge waren dazu notwendig. Zunächst musste ein Rahmen hergestellt werden, eventuell mit mehreren Querriegeln, auf den dann die Decklagen aufgebracht wurden und der die verschiedenen Beschläge aufzunehmen hatte. Zwischen den Decklagen wurden Leichtfaserplatten, mineralische Dämmwolle, Kartonwaben oder ähnliches eingebracht. Damit wurde dem Element mehr Kompaktheit und eventuell auch eine verbesserte Stabilität verliehen. Zumeist mussten in separaten Arbeitsgängen die Deckschichten auch noch aufwändig oberflächenbehandelt werden. So waren als Decklagen furnierte oder anderweitig beschichtete Hartfaserplatten üblich, wobei das fertige Element dann erst durch abschließendes Lackieren seine endgültige Oberfläche erhielt.

Heute werden Leichtbauplatten für den Möbelbau in zunehmendem Maß auch industriell gefertigt. Dazu wird eine leichte Mittellage mit Decklagen versehen, zumeist durch Klebung, so dass ein großformatiger, rahmenloser Verbund entsteht.

Je nach geforderter Stabilität der Platte werden unterschiedlich dicke Decklagen, zumeist aus einem Holzwerkstoff wie Span- oder Faserplatte, eingesetzt. Die verwendeten Platten können bereits beschichtet sein, also etwa mit einem Laminat, einer Farbe, einem Druck mit Versiegelung, einer Melaminharzschicht, einem Furnier, etc. versehen sein.

Als Mittellagen werden Kartonwaben oder Schaumstoffplatten bevorzugt. Für bestimmte Verwendungszwecke sind möglicherweise auch Wabenmaterialien aus anderen Materialien als Papier oder Karton sinnvoll. So können dafür dünnste Plattenmaterialien oder auch dünnwandiges Metall, beispielsweise aus Aluminium eingesetzt werden. Es ist aber auch möglich als Mittellagen leichte Holzwerkstoffe wie etwa entsprechende Spanplatten oder Faserplatten oder auch Massivholz geringer Dichte, wie Balsaholz, einzusetzen. Mit entsprechenden Ausnehmungen versehen sind grundsätzlich alle Materialien zum Einsatz als leichte Mittellage möglich. So werden dafür beispielsweise auch Holzarten herangezogen, die zwar nicht besonders geringes Gewicht aufweisen, dafür aber gut verfügbar sind und sich gut mit zerspanenden Werkzeugen bearbeiten lassen. Auch sind leichte Mittellagen aus Halmbündeln, die miteinander verbunden zu flächigen Gebilden aufgeschnitten werden, sodass dann die Länge der Halmabschnitte der Dicke der Mittellage entspricht, bekannt.

Neben dem Möbel- und Innenausbau werden Leichtbauplatten auch in vielen anderen Bereichen der Technik eingesetzt, wie beispielsweise in der Haustechnik oder im Schiffs-, Schienenfahrzeug-, Kraftwagen- und Flugzeugbau.
Je nach dem Einsatzgebiet einer rahmenlosen Leichtbauplatte wird sich diese durch die eingesetzten Materialen, durch deren lagenweisen Aufbau und die gewählte Art des Verbundes der Lagen untereinander unterscheiden. Grundsätzlich bestehen Leichtbauplatten jedoch stets aus zumindest zwei Decklagen und einer Mittellage, wobei die Lagen zumeist durch eine Verklebung miteinander verbunden werden. Die Decklagen haben dabei die wesentliche Funktion der Leichtbauplatte die gewünschte Oberfläche zu verleihen, deren Befestigung bzw. Verbindung mit anderen Bauteilen zu ermöglichen sowie punktuelle Belastungen aufzunehmen. Die Mittellage soll die beiden Decklagen schubfest miteinander verbinden können und in der Regel zugleich möglichst leicht sein, damit die Platte bezogen auf ihr Volumen ein möglichst geringes Gewicht aufweisen kann. Erst der Verbund von den Decklagen mit der Mittellage verleiht der Leichtbauplatte ihre jeweilige Biegefestigkeit und Steifigkeit.

Die mechanischen Eigenschaften einer Leichbauplatte hängen also wesentlich von den Festigkeiten der Decklagen, der Schubfestigkeit und Dicke der Mittellage und der Güte des Verbundes zwischen Decklagen und Mittellage ab. Daneben können aber auch zahlreiche weitere Eigenschaften einer Leichtbauplatte durch bestimmte Auswahl der eingesetzten Materialien, deren lagenweisen Aufbau und durch die gewählte Art des Verbundes der Lagen untereinander, erzielt werden. So ist es beispielsweise möglich durch Verwendung von wasserfesten Deck- und Mittellagen in Kombination mit einer wasserunlöslichen Verklebung, eine weitgehend gegen Feuchte beständige Platte zu erzeugen, die dann im Außenbereich oder etwa für Badezimmermöbel verwendet werden kann. Ebenso können bei Einsatz von anorganisch gebundenen Decklagen und einer Mittellage aus Schaumglas bei Verklebung mit einem hitzebeständigen Bindemittel Leichtbauplatten mit besonders erhöhter Brandbeständigkeit erhalten werden.

Da aber die Spezifikationen der verschiedenen Materialien bzw. des Verbundes, insbesondere auch die sich daraus ableitenden Eigenschaften, an einer rahmenlosen Leichtbauplatte selbst nur in den seltensten Fällen augenscheinlich feststellbar sind, ist es problematisch, rahmenlose Leichtbauplatten bestimmter Eigenschaften zu erkennen bzw. voneinander zu unterscheiden.

Die EP 0 301 195 A1 offenbart ein Verbundmaterial mit einer zwischen zwei Deckschichten angeordneten Wabenschicht. Zur Verbesserung der Absorptionseigenschaften von Radarstrahlen kann gemäß der EP 0 301 195 A1 in die Leichtbauplatte Ruß eingebracht werden.

Die WO 2006/100295 A1 offenbart eine Leichtbauplatte mit einer wabenförmigen Mittellage und zwei Deckplatten mit einem Holzwerkstoff.

Es ist daher eine Aufgabe der vorliegenden Erfindung, eine Möglichkeit zu schaffen, durch die in einfacher Weise Leichtbauplatten mit bestimmten Eigenschaften unterscheidbar sind.

Die zuvor hergeleitete und aufgezeigte Aufgabe wird gelöst durch die Verwendung einer mit einer Einfärbung versehenen Mittellage für eine Leichtbauplatte aus zumindest zwei Decklagen mit einem Holzwerkstoff und einer Mittellage als Anzeigemittel zur Anzeige von Informationen über zumindest eine Eigenschaft der Leichtbauplatte, wobei die Eigenschaft der Leichtbauplatte die Brandbeständigkeit, die Feuchtebeständigkeit, das Wärmedämmvermögen oder die mechanische Festigkeit ist.

Erfindungsgemäß weist die Mittellage einer Leichtbauplatte eine bestimmte Einfärbung, beispielsweise in einer oder mehreren Farben, auf, anhand der bestimmte Eigenschaften der Platte erkennbar sind. Mit anderen Worten, die Einfärbung ist ein Anzeigemittel, das dem Benutzer und/oder insbesondere automatisierten Bearbeitungsvorrichtungen wesentliche Informationen anzeigt, die die Mittellage oder Leichtbauplatte kennzeichnen. Dabei ist das Anzeigemittel an einer Stelle angeordnet, nämlich zwischen den Decklagen, die später im montierten Zustand nicht sichtbar, sondern verdeckt ist. Dabei ist es jedoch nicht zwingend, dass die jeweilige Eigenschaft der Leichtbauplatte mit von der Mittellage bestimmt ist. Vielmehr kann die Leichtbauplatte auch lediglich durch Auswahl bestimmter Decklagen beispielsweise eine erhöhte mechanische Festigkeit aufweisen, obwohl diese mit einer herkömmlichen Mittellage ausgestattet ist, wie sie auch bei Leichtbauplatten herkömmlicher mechanischer Festigkeit angewendet werden kann. In der Regel wird es jedoch bevorzugt sein, alle der zur Verfügung stehenden Einflussparameter zur Erzielung der gewünschten Eigenschaften der Leichtbauplatte, optimiert nach technischen und wirtschaftlichen Gesichtspunkten, auszuwählen.

Bei den im Möbelbau in der Regel verwendeten Wabenmaterialien aus Papier-, Karton- oder Pappwabe als Mittellagen für Leichtbauplatten, können die gewünschten Eigenschaften vor allem über die Zellweite, die Grammatur und Festigkeit des Wabenmaterials, eine chemische Ausrüstung etwa mit fungiziden, brandhemmenden oder hydrophobierenden Mitteln, oder durch die Verklebung der Flanken miteinander, entscheidend beeinflußt werden. Auch wird natürlich durch die Geometrie der Wabe selber entscheidender Einfluss auf das sich daraus ergebende mechanische Verhalten der Mittellage und damit der Leichtbauplatte selber, ausgeübt.

Da rahmenlose Leichtbauplatten zumeist in Großformaten hergestellt werden, um dann an beliebiger Stelle in das benötigte Plattenmaß aufgetrennt zu werden, ist es zweckmäßig, eine Mittellage vorzusehen, die in ihrer gesamten Ausdehnung gefärbt ist. So kann gewährleistet werden, dass zuverlässig an jeder Plattenkante, unabhängig an welcher Stelle der jeweilige Trennschnitt in der großformatigen Leichtbauplatte erfolgte, die auf die zumindest eine Eigenschaft der Leichtbauplatte abgestimmte Farbe, erkannt werden kann. Es ist aber ebenso denkbar und in bestimmten Ausführungsformen der Erfindung vorteilhaft, wenn die Farbe der Mittellage nur örtlich begrenzt vorgesehen ist, derart, dass beispielsweise nur ein Teil der gesamten Breite, Länge und/oder Dicke der Mittellage besagte Einfärbung aufweist.

Beispielsweise kann die Farbe an einen Raster bildenden Stellen vorgesehen sein, sodass zumindest im Abstand des jeweiligen Rastermaßes die auf die zumindest eine Eigenschaft der Leichtbauplatte abgestimmte Farbe erkannt werden kann. Es ist auch denkbar, dass die Mittellage in ihrer gesamten Breite, Länge und/oder Dicke gefärbt ist.

Es liegt weiterhin im Bereich der Erfindung, dass die Färbung der Mittellage erst durch die Anwendung eines Hilfsmittel erkennbar wird. Dies kann beispielsweise in der Anwendung von speziellem Licht, wie etwa UV-Licht sein. Wird mit diesem eine Leichtbauplatte, deren Mittellage beispielsweise mit einer fluoriszierenden Farbe gefärbt ist, angestrahlt, so wird erst damit die auf die zumindest eine Eigenschaft abgestimmte Farbe erkennbar. Damit ist es dem Hersteller beispielsweise möglich, eine Eigenschaft welche nicht für den Verarbeiter bestimmt ist, verdeckt kenntlich zu machen. In diesem Zusammenhang soll explizit darauf hingewiesen sein, dass unter Eigenschaft im Rahmen der Erfindung beispielsweise auch die Herkunft, respektive der Hersteller oder eine bestimmte Fertigungsanlage des Herstellers verstanden werden kann - genauso aber auch ein etwaiger Lieferant einer Mittellage.

Im Bereich des Möbelbaues kommen generell sehr häufig Holzwerkstoffe zum Einsatz. Span- und Faserplatten werden hier in großem Ausmaß verarbeitet. Diese Produkte zeichnen sich vor allem durch ihre gute Bearbeitbarkeit und Beschichtbarkeit, ihre vergleichsweise zum Gewicht relativ hohe Festigkeit sowie durch ihre problemlose Entsorgung aus. Holzwerkstoffe sind mit den verschiedensten Dekoren erhältlich, die sich wiederum durch ihre Langlebigkeit und ihre positiven hygienischen Eigenschaften auszeichnen. Dementsprechend kommt den Holzwerkstoffen auch eine große Bedeutung als Decklagenmaterial bei Leichtbauplatten für den Möbelbau zu. Je nach Anforderung an beispielsweise die Feuchte- oder Brandbeständigkeit einer Leichtbauplatte kann als Decklage eine wasserfest gebundene Span- oder Faserplatte bzw. auch ein solche, die mit einem Brandschutzmittel ausgerüstet ist, eingesetzt werden.

Wo geringere Anforderungen hinsichtlich der mechanischen Festigkeit bestehen, jedoch ein äußerst geringes Gewicht der Leichtbauplatte gewünscht ist, können beispielsweise aber auch Decklagen aus einem Schichtstoff oder einer, insbesondere dünnen, Metallschicht oder auch eine Kombination aus beidem eingesetzt werden.

Die im Möbel- und Innenausbau in der Regel wesentlichen, sich aus den dargelegten Parametern ableitenden Eigenschaften einer Leichtbauplatte sind deren Brandbeständigkeit, deren Feuchtebeständigkeit, deren Wärmedämmvermögen sowie deren mechanische Festigkeit. Eine bevorzugte Ausführungsform der Erfindung besteht daher darin, die Mittellage einer Leichtbauplatte, die erhöhten Anforderungen hinsichtlich ihrer Brandbeständigkeit genügt, aus Decklagen und einer Mittellage die einen roten Farbton aufweist, bereitzustellen. Die Farbe Rot ist seit je her dem Verarbeiter im Möbel und Innenausbau für solche Plattenmaterialien geläufig, die sich durch eine erhöhte Brandbeständigkeit auszeichnen.

Eine weitere bevorzugte Ausführungsform der Erfindung besteht darin, die Mittellage einer Leichtbauplatte, die erhöhten Anforderungen hinsichtlich ihrer Feuchtebeständigkeit genügt, aus Decklagen und einer Mittellage die einen grünen Farbton aufweist, bereitzustellen. Die Farbe Grün ist seit je her dem Verarbeiter im Möbel und Innenausbau für solche Plattenmaterialien geläufig, die sich durch eine erhöhte Feuchtebeständigkeit auszeichnen.

Darüber hinaus besteht eine weitere bevorzugte Ausführungsform der Erfindung darin, die Mittellage einer Leichtbauplatte, die verbesserte Eigenschaften hinsichtlich ihres Wärmedämmvermögens aufweist, aus Decklagen und einer Mittellage die einen gelben Farbton aufweist, bereitzustellen. Die Farbe Gelb ist dem Verarbeiter im Möbel und Innenausbau wegen der zumeist gelben Farbe von Glaswolledämmstoff, für solche Materialien geläufig, die sich durch eine erhöhtes Wärmedämmvermögen auszeichnen.

Noch eine weitere bevorzugte Ausführungsform der Erfindung besteht darin, die Mittellage einer Leichtbauplatte, die verbesserte Eigenschaften hinsichtlich ihrer mechanischen Festigkeit aufweist, aus Decklagen und einer Mittellage die einen schwarzen Farbton aufweist, bereitzustellen. Die Farbe Schwarz kann mit einer Einlage aus Kohlefaser in das Material der Mittellage assoziiert werden, womit dem Verarbeiter nahegelegt wird, dass sich eine solche Leichtbauplatte durch eine erhöhte mechanische Festigkeit auszeichnet.

Auch Kombinationen von Einfärbungen bzw. Farben bei ein und derselben Mittellage sind denkbar.

Als Eigenschaft im Sinne der Erfindung ist auch die Anwendbarkeit von bestimmten Befestigungs- und/oder Beschlagsystemen zu verstehen. So ist es gemäß einer weiteren bevorzugten Ausführungsform vorgesehen, die Mittellage einer Leichtbauplatte, die auf bestimmte Befestigungs- und/oder Beschlagsysteme abgestimmt ist oder für deren Anwendung der Hersteller der Leichtbauplatte besondere Kriterien der Gebrauchstauglichkeit zusichert, in einem besonderen Farbton zu färben.

Neben diesen genannten, im Bereich des Möbel- und Innenausbaues wesentlichen Eigenschaften einer Leichtbauplatte, sind in anderen Bereichen der Technik weitere Eigenschaften als bedeutsam einzustufen. Beispielsweise sei hier aus dem Bereich der Haustechnik der Einsatz von Leichtbauplatten mit schalldurchlässigen Decklagen als Absorber genannt. Je nach Aufbau solcher Leichtbauplatten bestimmt sich deren Schallabsorptionsgrad. Um dem Verarbeiter solcher Leichtbauplatten eine gute Unterscheidbarkeit hinsichtlich der akustischen Eigenschaften zu ermöglichen kann es bevorzugt sein, Mittellagen aus einem Wabenmaterial einzusetzen, die aus einem nur partiell oberflächlich gefärbten Material bestehen. Die Stege der Waben können also etwa durch anbringen von Linien in Form von Punkten, Strichen, einfachen oder mehrfachen Vollinien oder Kombinationen daraus, im Sinne der Erfindung gefärbt und so auf die Eigenschaft der daraus hergestellten Leichtbauplatte abgestimmt sein. Auf diese Weise läßt sich beispielsweise ein maschinenlesbarer Code, ein sogenannter Barcode, vorsehen.

Im Fahrzeugbau, wo es oftmals auf die mechanische Festigkeit, hohe Wärmestandfestigkeit oder auch die Beständigkeit gegenüber Vibrationen ankommt, sind weiters vielfältige Anwendungen der Erfindung möglich.

Es gibt nun eine Vielzahl von Möglichkeiten, die erfindungsgemäßen Verwendungen auszugestalten und weiterzubilden, Hierzu wird beispielsweise verwiesen einerseits auf die dem Patentanspruch 1 nachgeordneten Patentansprüche, andererseits auf die Beschreibung von Ausführungsbeispielen in Verbindung mit der Zeichnung. In der Zeichnung zeigt;
- Fig. 1: ein Ausführungsbeispiel gemäß der vorliegenden Erfindung mit einer Leichtbauplatte mit einer partiell gefärbten Mittellage aus einem Wabenmaterial, und
- Fig. 2: ein Ausführungsbeispiel gemäß der vorliegenden Erfindung mit einer Leichtbauplatte mit einer durch Linien gefärbten Mittellage aus einem Wabenmaterial.

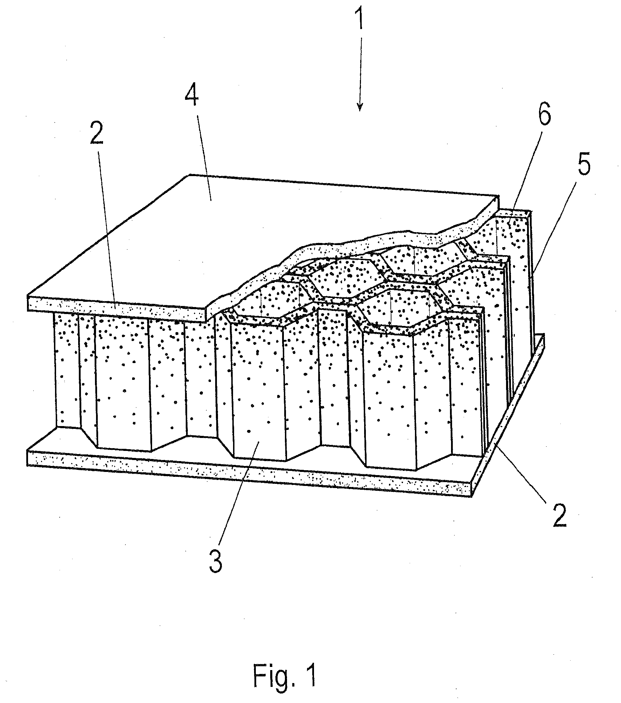

Figur 1 zeigt eine Leichtbauplatte 1 mit zwei Decklagen 2 und einer Mittellage 3 aus einem Pappwabenmaterial. Die Decklagen bestehen aus einer 4 mm dicken Spanplatte, die an der nach außen gewandten Oberfläche der Leichtbauplatte mit einem Laminat 4, das ein Holzdekor zeigt, versehen ist. Die Pappwabe ist aus einzelnen Stegen 5, die wechselseitig, jeweils seitlich versetzt zueinander verklebt sind, hergestellt. Die fertige, gestreckte Wabe wurde mit einer Einfärbung 6 versehen, nämlich hier von einer Seite mit Farbe besprüht, was die in der Figur ersichtliche Abnahme der Farbintensität von der Oberseite zur Unterseite der Wabe bewirkt, Die Mittellage 3 ist hier zumindest partiell gefärbt wobei der gewählte Farbton auf zumindest eine Eigenschaft der Leichtbauplatte 1 abgestimmt ist.

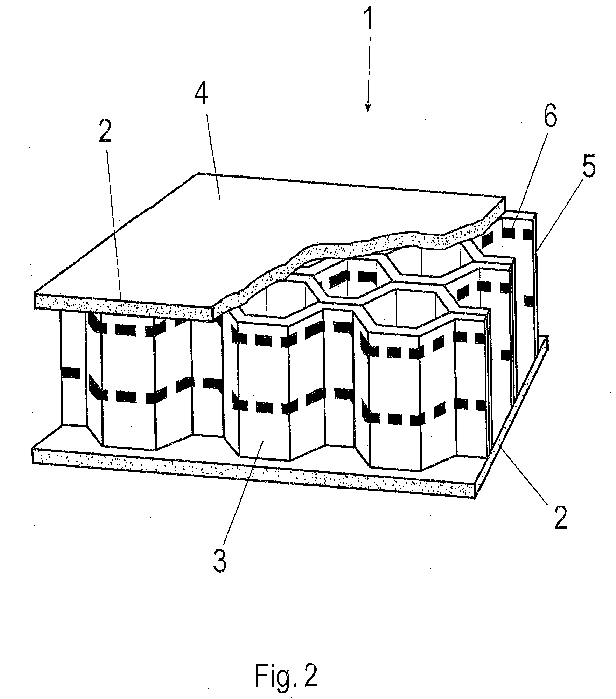

Figur 2 zeigt ebenso eine Leichtbauplatte 1 mit einer Mittellage 3, die aus einem partiell oberflächlich gefärbten Wabenmaterial ausgebildet ist. Die hier in Form von zwei strichlierten Linien 7 ausgeführte Einfärbung 6 der Mittellage 3 kann dazu dienen, den Anwender darauf hinzuweisen, dass die vorliegende Platte 1 eine Wärmestandfestigkeit der Klasse 2, gemäß einer vom Hersteller getroffenen oder gemäß einer einschlägigen technischen Regel spezifizierten Einteilung, aufweist.

## Patentansprüche

1. Verwendung einer mit einer Einfärbung (6) versehenen Mittellage (3) für eine Leichtbauplatte (1) aus zumindest zwei Decklagen (2) mit einem Holzwerkstoff und einer Mittellage (3) als Anzeigemittel zur Anzeige von Informationen über zumindest eine Eigenschaft der Leichtbauplatte (1), wobei die Eigenschaft der Leichtbauplatte (1) die Brandbeständigkeit, die Feuchtebeständigkeit, das Wärmedämmvermögen oder die mechanische Festigkeit ist, und wobei das Anzeigemittel einen maschinenlesbaren Code in Form von Punkten, Linien (7) oder geometrischen Mustern aufweist.

2. Verwendung nach Anspruch 1, wobei das Anzeigemittel innerhalb der Leichtbauplatte (1) derart angeordnet ist, dass es im montierten Zustand der Leichtbauplatte (1) verdeckt ist.

3. Verwendung nach einem der vorgenannten Ansprüche, wobei die Einfärbung (6) eine oder mehrere Farben aufweist.

4. Verwendung nach einem der vorgenannten Ansprüche, wobei der Holzwerkstoff eine Span- oder eine Faserplatte ist.

5. Verwendung nach einem der vorgenannten Ansprüche, wobei die Decklagen (2) einen Schichtstoff (4) und/oder eine Metallschicht aufweisen.

6. Verwendung nach einem der vorgenannten Ansprüche, wobei die Einfärbung (6) einen roten Farbton aufweist und wobei die Leichtbauplatte (1) verbesserte Eigenschaften hinsichtlich ihrer Brandbeständigkeit aufweist.

7. Verwendung nach einem der vorgenannten Ansprüche, wobei die Einfärbung (6) einen grünen Farbton aufweist und wobei die Leichtbauplatte (1) verbesserte Eigenschaften hinsichtlich Feuchtebeständigkeit aufweist.

8. Verwendung nach einem der vorgenannten Ansprüche, wobei die Einfärbung (6) einen gelben Farbton aufweist und wobei die Leichtbauplatte (1) verbesserte Eigenschaften hinsichtlich ihres Wärmedämmvermögens aufweist.

9. Verwendung nach einem der vorgenannten Ansprüche, wobei die Einfärbung (6) einen schwarzen Farbton aufweist und die Leichtbauplatte (1) verbesserte Eigenschaften hinsichtlich ihrer mechanischen Festigkeit aufweist.

10. Verwendung nach einem der vorgenannten Ansprüche, wobei das Anzeigemittel von einem massegefärbten Material der Mittellage (3) gebildet wird.

11. Verwendung nach einem der vorgenannten Ansprüche, wobei das Anzeigemittel von einem zumindest partiell oberflächlich gefärbten Material der Mittellage (3) gebildet wird.

12. Verwendung nach einem der vorgenannten Ansprüche, wobei die Einfärbung (6) eine fluoreszierende Farbe aufweist.

## Claims

1. Use of a centre layer (3), provided with a colouring (6), for a lightweight construction panel (1) comprising at least two cover layers (2) with a wood-based material and a centre layer (3) as display means for displaying information about at least one property of the lightweight construction panel (1), wherein the property of the lightweight construction panel (1) is the fire resistance, the moisture resistance, the thermal insulation capacity or the mechanical strength, and wherein the display means has a machine-readable code in the form of dots, lines (7) or geometric patterns.

2. Use according to claim 1, wherein the display means is arranged within the lightweight panel (1) in such a way that it is concealed in the assembled state of the lightweight panel (1).

3. Use according to one of the aforementioned claims, wherein the colouring (6) has one or more colours.

4. Use according to one of the aforementioned claims, wherein the wood-based material is a chipboard or a fibreboard.

5. Use in accordance with one of the aforementioned claims, wherein the cover layers (2) has a laminate (4) and/or a metal layer.

6. Use according to one of the aforementioned claims, wherein the colouring (6) has a red hue and wherein the lightweight panel (1) has improved properties with respect to its fire resistance.

7. Use according to one of the aforementioned claims, wherein the colouring (6) has a green shade and wherein the lightweight panel (1) has improved properties with respect to moisture resistance.

8. Use according to one of the aforementioned claims, wherein the colouring (6) has a yellow shade and wherein the lightweight building panel (1) has improved properties with regard to its thermal insulation capacity.

9. Use according to one of the aforementioned claims, wherein the colouring (6) has a black shade and the lightweight panel (1) has improved properties with regard to its mechanical strength.

10. Use according to one of the aforementioned claims, wherein the display means is formed by a mass-dyed material of the central layer (3).

11. Use according to one of the aforementioned claims, wherein the display means is formed by an at least partially surface-coloured material of the central layer (3).

12. Use according to one of the aforementioned claims, wherein the colouring (6) has a fluorescent colour.

## Revendications

1. Utilisation d'une couche centrale (3), pourvue d'une coloration (6), pour un panneau de construction léger (1) comprenant au moins deux couches de revêtement (2) avec un matériau à base de bois et une couche centrale (3) comme moyen d'affichage pour afficher des informations concernant au moins une propriété du panneau de construction léger (1), la propriété du panneau de construction léger (1) étant la résistance au feu, la résistance à l'humidité, le pouvoir isolant thermique ou la force mécanique, et le moyen d'affichage ayant un code pouvant être lu machinellement, sous forme de points, lignes (7) ou motifs géométriques.

2. Utilisation selon la revendication 1, le moyen d'affichage étant disposé à l'intérieur du panneau léger (1) de telle sorte qu'il soit dissimulé dans l'état monté du panneau léger (1).

3. Utilisation selon l'une des revendications précédentes, la coloration (6) ayant une ou plusieurs couleurs.

4. Utilisation selon l'une des revendications précédentes, le matériau à base de bois étant un panneau de particules ou un panneau de fibres.

5. Utilisation selon l'une des revendications précédentes, les couches de revêtement (2) présentant un stratifié (4) et/ou une couche métallique.

6. Utilisation selon l'une des revendications précédentes, la coloration (6) ayant une teinte rouge et le panneau léger (1) ayant des propriétés améliorées en ce qui concerne sa résistance au feu.

7. Utilisation selon l'une des revendications précédentes, la coloration (6) présentant une teinte verte et le panneau léger (1) présentant des propriétés améliorées en ce qui concerne la résistance à l'humidité.

8. Utilisation selon l'une des revendications précédentes, la coloration (6) présentant une teinte jaune et le panneau de construction léger (1) présentant des propriétés améliorées en ce qui concerne sa capacité d'isolation thermique.

9. Utilisation selon l'une des revendications précédentes, la coloration (6) présentant une teinte noire et le panneau léger (1) présentant des propriétés améliorées en ce qui concerne sa résistance mécanique.

10. Utilisation selon l'une des revendications précédentes, le moyen d'affichage étant formé par un matériau teint dans la masse de la couche centrale (3).

11. Utilisation selon l'une des revendications précédentes, le moyen d'affichage étant formé par un matériau au moins partiellement coloré en surface de la couche centrale (3).

12. Utilisation selon l'une des revendications précédentes, la coloration (6) ayant une couleur fluorescente.
